# FASCICULE DE BREVET EUROPEEN

(11) **EP 3 075 065 B1**
(45) Date de publication et mention de la délivrance du brevet: **30.06.2021**
(21) Numéro de dépôt: 14814951.1
(22) Date de dépôt: 25.11.2014
(51) Int. Cl.: H02H 3/33, B60L 53/22, H02M 1/12

(54) **DISPOSITIF ET PROCÉDÉ D'ÉCHANGE SÉCURITAIRE D'ÉNERGIE ÉLECTRIQUE ENTRE UN CONSOMMATEUR ET UNE SOURCE D'ÉNERGIE ÉLECTRIQUE**
VORRICHTUNG UND VERFAHREN FÜR EINEN STROMSICHERHEITSAUSTAUSCH ZWISCHEN EINEM VERBRAUCHER UND EINER STROMQUELLE
DEVICE AND METHOD FOR A POWER SECURITY EXCHANGE BETWEEN A CONSUMER AND A POWER SOURCE

(30) Priorité: 26.11.2013 FR 1361657
(43) Date de publication de la demande: 05.10.2016
(73) Titulaire: Valeo Siemens eAutomotive France SAS, 95800 Cergy (FR)
(72) Inventeur: BOUCHEZ, Boris, 95800 Cergy le Haut (FR); OSWALD, Dominique, 78800 Houilles (FR)
(74) Mandataire: Argyma
(86) Numéro de dépôt international: PCT/FR2014/053033
(87) Numéro de publication internationale: WO 2015/079161

(56) Documents cités:
- WO-A2-2012/072308
- FR-A1- 2 977 086
- US-A1- 2012 249 067
- MARCELO LOBO HELDWEIN ET AL: "Implementation of a Transformerless Common-Mode Active Filter for Offline Converter Systems", IEEE TRANSACTIONS ON INDUSTRIAL ELECTRONICS, IEEE SERVICE CENTER, PISCATAWAY, NJ, USA, vol. 57, no. 5, 1 mai 2010 (2010-05-01), pages 1772-1786, XP011295954, ISSN: 0278-0046

## Description

La présente invention concerne l'échange sécuritaire d'énergie électrique entre un consommateur électrique d'un circuit électrique d'un ensemble et une source électrique d'un réseau électrique extérieur à l'ensemble. En particulier, l'invention concerne un procédé sécuritaire de charge d'une unité de stockage d'énergie électrique d'un système de traction électrique d'un véhicule à partir d'un réseau électrique domestique.

L'invention concerne notamment le domaine des véhicules électriques ou hybrides. Dans de tels véhicules, un moteur électrique, généralement triphasé, sert ou tout du moins participe à l'entraînement du véhicule. Il est alimenté par une unité de stockage d'énergie qu'il est nécessaire de recharger périodiquement.

Il est connu de recharger l'unité de stockage à l'aide d'une installation fixe de fourniture de courant, tel qu'un circuit électrique domestique alimenté en courant alternatif. Le véhicule est relié à l'installation et un circuit embarqué dans le véhicule permet de recharger la batterie, notamment à l'aide d'un redresseur.

Le circuit électrique embarqué peut être à l'origine de courants de fuite, notamment par l'intermédiaire de composants parasites situés entre le circuit et le châssis du véhicule. De tels courants de fuite sont susceptibles de traverser une impédance placée entre le châssis et la terre, telle qu'une personne touchant la carrosserie du véhicule alors qu'elle a les pieds en contact avec le sol. On peut encore avoir le même problème si on touche la carrosserie d'une main, et un équipement métallique de l'habitation de l'autre main. Les conséquences d'un tel phénomène sur l'organisme sont plus ou moins sévères, pouvant aller de la simple sensation désagréable jusqu'à l'électrocution.

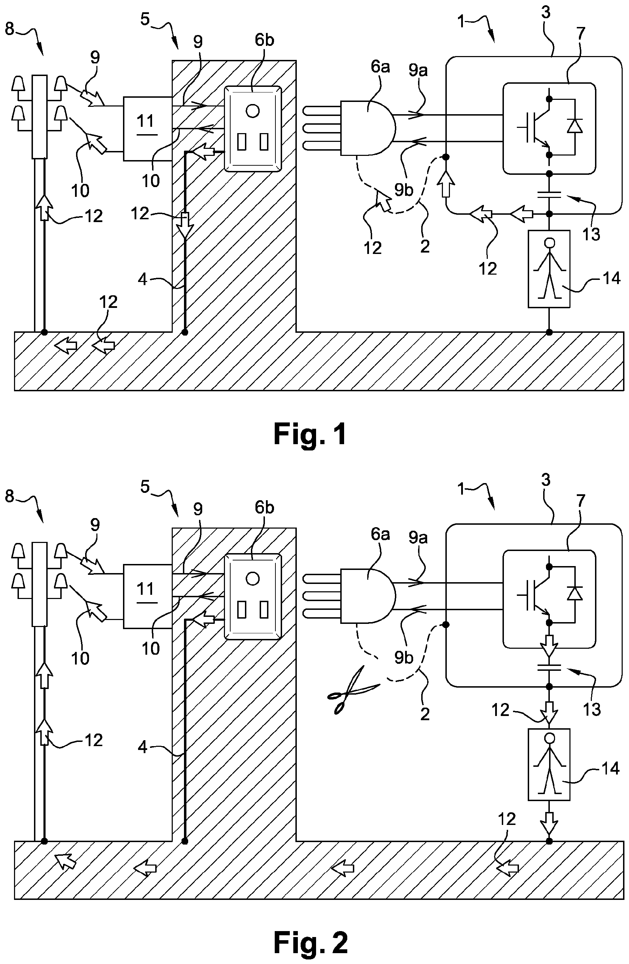

Comme illustré aux figures 1 et 2, il est connu pour limiter ce risque d'équiper le véhicule 1 d'un conducteur de terre 2 permettant de relier le châssis 3 du véhicule 1 à un câble 4 de mise à la terre d'une installation électrique domestique 5, par l'intermédiaire d'un connecteur électrique 6a, 6b.

A ces figures, une circulation de courant à travers un réseau électrique 8, l'installation électrique domestique 5 et un circuit électrique 7 du véhicule est illustré par des flèches 9a, 9b, ici dans une configuration phase/neutre. Un disjoncteur différentiel 11 est prévu entre le réseau d'alimentation 8 et l'installation électrique domestique 5. Il a pour fonction de détecter les courants de fuite et de couper l'alimentation en cas de danger.

A la figure 1, un courant de mode commun, illustré par les flèches 12, est présent. Typiquement, le courant de mode commun comprend une composante parasite prévue par conception qui est essentiellement alternative et une composante de défaut qui peut comprendre un signal alternatif et/ou continu. La composante de défaut correspond à un évènement non souhaité qui provoque un défaut d'isolement.

Le courant de mode commun atteint le châssis 3 par l'intermédiaire d'une capacité parasite 13 ou des condensateurs utilisés à des fins de compatibilité électromagnétique. Le conducteur de terre 2 est ici opérationnel et le courant de mode commun retourne préférentiellement du châssis 3 du véhicule vers l'installation domestique par ledit câble 4 de mise à la terre. Indépendamment du déclenchement du disjoncteur différentiel 11, les risques qu'une personne 14 venant en contact avec le châssis soit traversée par une partie du courant de mode commun lui causant des dommages sont donc limités.

A la figure 2, le même courant de mode commun est présent mais le conducteur de terre est défaillant. Il est ici sectionné. Dans cette hypothèse, le courant de mode commun traverse la personne 14 au contact du châssis mais les conséquences d'une telle défaillance restent limitées si le disjoncteur différentiel 11 est opérationnel. En effet, celui-ci coupe l'alimentation si les seuils fixés pour son déclanchement sont atteints, typiquement 30 mA pour des courants alternatifs à 50 Hz pour les normes actuellement en vigueur. La personne 14 au contact du châssis 3 risque de percevoir la traversée du courant de mode commun mais le déclenchement du disjoncteur opérationnel lui évitera tout dommage corporel sérieux. Les exemples illustrés en figures 1 et 2 comprennent une capacité parasite 13, mais le défaut peut apparaitre pour tout type d'impédance parasite entre le circuit 7 et le châssis 3 du véhicule.

Une autre situation de faute apparaît lorsque la personne touche l'un des fils de la ligne électrique reliant le circuit électrique 7 à l'installation électrique domestique 5. La personne est alors protégée par le disjoncteur différentiel d'une façon similaire à celle décrite pour la figure 2.

Cependant, dans le cadre du développement des véhicules électriques et hybrides, il est préférable que la sécurité de la charge de l'unité de stockage soit relativement indépendante de l'état du disjoncteur différentiel 11 de l'installation électrique. On doit s'assurer que, quand bien même le disjoncteur différentiel 11 serait défaillant, la charge de l'unité de stockage reste sécuritaire pour un utilisateur.

Par ailleurs, pour entre autres renforcer la sécurité, des normes existent pour limiter la valeur du courant de mode commun. Outre l'aspect sécuritaire, sans compensation du courant de mode commun, un courant de mode commun trop élevé pourrait circuler à travers le réseau électrique et être vu par le disjoncteur différentiel. Or, suivant la sensibilité du disjoncteur différentiel, ce courant peut entraîner une activation intempestive du disjoncteur en fonctionnement normal. Les normes européennes limitent ainsi à 3,5 mA la valeur maximale du courant de mode commun à une fréquence de 50 Hz. Pour respecter ces normes, on connaît de la demande US 2004/0004514 un filtre actif cherchant à réduire le courant de mode commun aux hautes fréquences dans le domaine de la compatibilité électromagnétique (CEM). On connaît également de la demande EP2571149 au nom de la demanderesse un circuit de réduction du courant de mode commun

La demande US 2012/249067 décrit un dispositif électrique pour un échange sécuritaire d'énergie électrique entre un convertisseur de puissance d'un véhicule et une prise murale connectée à un réseau électrique extérieur. L'ensemble de câbles comprend un système de mesure apte à mesurer un courant de mode commun circulant dans la ligne d'échange d'énergie. L'ensemble de câbles comprend un composant électronique relié au système de mesure du courant de mode commun. Ce composant est configuré pour injecter un courant de compensation dans le neutre de la ligne d'échange d'énergie afin d'éviter que le disjoncteur GFI de la prise murale ne se déclenche du fait d'un courant de fuite du véhicule.

Il est recherché une intégration des fonctionnalités électriques dans le véhicule qui soit moins encombrante et plus efficace. Dans cette optique, on souhaite obtenir une détection de défaillance lors de l'échange électrique entre le consommateur et la source électrique, en particulier dans la charge d'une unité de stockage à partir d'une source électrique extérieure, en utilisant au mieux les fonctionnalités électriques.

Dans ce but, l'invention concerne la détection de défaillance lors d'un échange d'énergie électrique entre un consommateur électrique d'un circuit d'un ensemble et une source électrique d'un réseau extérieur à l'ensemble, dans un procédé et/ou un dispositif utilisant la réduction de mode commun.

En particulier, comme revendiqué dans la revendication 1, l'invention concerne un dispositif électrique pour un échange sécuritaire d'énergie électrique entre un consommateur d'énergie électrique d'un circuit électrique d'un ensemble, notamment d'un véhicule, et une source électrique d'un réseau électrique extérieur audit ensemble, comportant :
- une ligne électrique reliant le réseau électrique audit ensemble, ladite ligne comprenant des conducteurs électriques dans lesquels une première partie, dite ligne d'échange d'énergie, est apte à être connectée audit réseau électrique de manière à permettre un échange d'énergie électrique entre la source d'énergie électrique dudit réseau et ledit consommateur d'énergie ; et une deuxième partie, dite ligne de terre, est apte à réaliser une liaison équipotentielle entre la masse électrique de l'ensemble et la terre du réseau électrique ;
- un premier système de mesure apte à mesurer un courant de mode commun circulant dans l'une des deux parties de la ligne électrique lors d'un échange d'énergie entre la source électrique et le consommateur ;
- au moins une impédance reliée par une de ses bornes à la ligne d'échange électrique de la ligne électrique ou à un fil relié à un potentiel interne du circuit électrique,
- un composant électronique relié d'une part audit premier système de mesure du courant de mode commun, le composant étant configuré pour appliquer, entre la ligne de terre et une autre borne de l'impédance, une grandeur électrique permettant, lorsque de l'énergie électrique est échangée entre le consommateur et la source d'énergie électrique, de réduire le courant de mode commun circulant dans la partie de la ligne électrique dont le courant est mesuré par le premier système de mesure,
- un deuxième système de mesure apte à mesurer un courant résiduel circulant dans au moins la partie de la ligne électrique dont le courant n'est pas mesuré par le premier système de mesure, et
- une unité de commande configurée pour détecter une défaillance de l'échange d'énergie lorsqu'une valeur obtenue à partir du courant mesuré par le deuxième système de mesure est supérieure à une valeur seuil.

Le dispositif est notamment apte à réaliser un échange sécuritaire d'énergie électrique entre une unité de stockage d'énergie électrique d'un circuit électrique embarqué dans un véhicule et une source électrique d'un réseau électrique extérieur au véhicule, par exemple depuis une borne de recharge ou une installation électrique domestique. L'unité de stockage est par exemple destinée à alimenter un système de traction électrique du véhicule.

Par courant résiduel, on désigne un courant résultant circulant dans un ou plusieurs conducteurs électriques. En particulier, dans le cas où il y a plusieurs conducteurs électriques, le courant résiduel est la somme algébrique des courants parcourant lesdits conducteurs.

Le fil relié à un potentiel interne du circuit électrique est en particulier un conducteur électrique reliant une borne de l'impédance à un potentiel interne du circuit de sorte que le potentiel à la borne de l'impédance soit égal audit potentiel interne du circuit électrique.

Notamment, le composant électronique applique une grandeur électrique fonction de la première mesure avec un gain qui dépend de l'écart entre la valeur du courant de mode commun déterminée par le premier système de mesure et une valeur consigne. La valeur consigne est en particulier inférieure ou égale à 3 mA ou 0,5 mA, voire inférieure ou égale à 0,2 mA, voire même sensible ment égale à zéro.

Grace au premier système de mesure, à l'impédance et au composant électronique, un courant de mode commun circulant dans l'une des parties de ligne électrique, c'est-à-dire la ligne d'échange d'énergie ou la ligne de terre, est réduit. Dans un fonctionnement normal, le courant de mode commun circulant dans l'autre partie de la ligne électrique est sensiblement égal et s'en trouve donc également réduit. Cependant, lorsqu'une personne touche directement un conducteur de la ligne électrique ou, dans le cas où la ligne de terre est rompue, lorsqu'un utilisateur touche la masse de l'ensemble, une impédance intempestive qui correspond à celle de la personne apparaît. Cette impédance intempestive modifie le courant de mode commun. Le courant de mode commun circulant sur la partie dont le courant est mesuré par le premier système de mesure va être compensé. Mais, dans la partie de ligne dont le courant n'est pas mesuré par le premier système de mesure, le courant de mode commun n'est plus sensiblement nul et augmente car au moins une partie du courant de mode commun circule dans l'impédance intempestive.

Ainsi, à partir du courant résiduel mesuré dans la partie de la ligne dont le courant n'est pas mesuré par le premier système de mesure, on obtient un indicateur d'une situation de défaillance de l'échange d'énergie entre le consommateur et la source électrique.

Selon un mode de réalisation, la partie de la ligne électrique dont le courant est mesuré par le premier système de mesure est la ligne d'échange électrique et le deuxième système de mesure est apte à mesurer un courant résiduel circulant dans au moins la ligne de terre.

Autrement dit, le courant de mode commun circulant dans la ligne d'échange électrique est compensé par un courant généré par la grandeur électrique appliquée à la borne de l'impédance, cette impédance étant reliée par l'autre de ses bornes à la ligne d'échange électrique ou à un fil relié à un potentiel interne du circuit électrique. Le courant résiduel mesuré dans au moins la ligne de terre permet de détecter une situation de défaillance comme expliqué précédemment.

Selon un mode de réalisation, la partie de la ligne électrique dont le courant est mesuré par le premier système de mesure est la ligne de terre et le deuxième système de mesure est apte à mesurer un courant résiduel circulant dans au moins la ligne d'échange électrique.

Autrement dit, le courant de mode commun circulant dans la ligne de terre est compensé par un courant généré par la grandeur électrique appliquée à la borne de l'impédance, cette impédance étant reliée par l'autre de ses bornes à la ligne d'échange électrique ou à un fil relié à un potentiel interne du circuit électrique. Le courant résiduel mesuré dans au moins la ligne d'échange électrique permet de détecter une situation de défaillance comme expliqué précédemment.

Selon un mode de réalisation, le deuxième système de mesure est apte à mesurer un courant résiduel circulant dans la partie dont le courant est mesuré par le premier système de mesure et la partie dont le courant n'est pas mesuré par leditpremier système de mesure. Autrement dit, le système de mesure est apte à mesurer le courant résiduel circulant dans l'ensemble de la ligne électrique, c'est-à-dire dans la ligne d'échange électrique et dans la ligne de terre.

Selon un mode de réalisation, le deuxième système de mesure est apte à mesurer un courant résiduel circulant uniquement dans la partie dont le courant n'est pas mesuré par le premier système de mesure. Autrement dit, le deuxième système de mesure est apte à mesurer un courant résiduel circulant uniquement dans la ligne de terre, si la ligne d'échange électrique est celle dont le courant est mesuré par le premier système de mesure ; ou le deuxième système de mesure est apte à mesurer un courant résiduel circulant uniquement dans la ligne d'échange électrique, si la ligne de terre est celle dont le courant est mesuré par le premier système de mesure.

Selon un mode de réalisation, le dispositif comprend un ou plusieurs interrupteurs, l'unité de commande étant configurée pour les ouvrir de façon à interrompre l'échange d'énergie en cas de défaillance. Un exemple d'interrupteur est un relais électromécanique. Cependant tout type d'interrupteur adapté à des applications de puissance peut être envisagé.

Comme revendiqué dans la revendication 6, l'invention concerne aussi un procédé sécuritaire d'échange d'énergie entre un consommateur d'énergie électrique d'un circuit électrique d'un ensemble, notamment d'un véhicule, et une source électrique d'un réseau électrique extérieur audit ensemble, comportant un échange d'énergie par l'intermédiaire d'une ligne électrique reliant le réseau électrique audit ensemble et comprenant des conducteurs électriques dans lesquels une première partie, dite ligne d'échange électrique, est connectée audit réseau électrique de manière à permettre un échange d'énergie électrique entre la source d'énergie électrique dudit réseau et ledit consommateur ; et une deuxième partie, dite ligne de terre, réalise une liaison équipotentielle entre la masse électrique de l'ensemble et la terre du réseau électrique, au moins une impédance étant reliée à la ligne d'échange électrique de la ligne électrique par une se ses bornes ou à un fil relié à un potentiel interne du circuit électrique ;
le procédé comprenant en outre :
- la réduction d'un courant de mode commun comportant :
   - une première mesure d'un courant de mode commun circulant dans l'une desdites parties de la ligne électrique ;
   - l'application à l'aide d'un composant électronique recevant la première mesure, d'une grandeur électrique entre la ligne de terre et l'autre borne de l'impédance, ladite grandeur électrique permettant de réduire le courant de mode commun circulant dans la partie de la ligne électrique dans laquelle la première mesure est réalisée,
- une deuxième mesure d'un courant résiduel circulant dans au moins la partie qui ne pas subit pas la première mesure, et
- la détection d'une défaillance de l'échange d'énergie lorsqu'une valeur obtenue à partir du courant issu de la deuxième mesure de courant est supérieure à une valeur seuil.

Le procédé réalise notamment un échange sécuritaire d'énergie électrique entre une unité de stockage d'énergie électrique d'un circuit électrique embarqué dans un véhicule et une source électrique d'un réseau électrique extérieur au véhicule, par exemple depuis une borne de recharge ou une installation électrique domestique. L'unité de stockage est par exemple destinée à alimenter un système de traction électrique du véhicule.

Selon un mode de réalisation, le procédé comporte la détection de défaillance lorsque la valeur de la deuxième mesure est supérieure à un seuil, notamment 5 mA, voire 3,5 mA.

En fonctionnement normal, la deuxième mesure est sensiblement égale à la première mesure car le courant de mode commun circule dans la ligne d'échange électrique puis dans la ligne de terre ou vice versa. En cas de défaillance dans l'échange d'énergie, notamment lorsqu'une personne touche directement un conducteur de la ligne électrique ou, dans le cas où la ligne de terre est rompue, lorsqu'une personne touche la masse de l'ensemble, une impédance intempestive qui correspond à celle de la personne apparaît. Cette impédance intempestive modifie le courant de mode commun vu dans la ligne d'échange électrique ou dans la ligne de terre. Le courant de mode commun circulant sur la partie dont le courant est mesuré par le premier système de mesure, va être compensé. Mais, dans la partie de ligne dont le courant n'est pas mesuré par le premier système de mesure, le courant de mode commun n'est plus sensiblement nul et augmente car au moins une partie du courant de mode commun circule dans l'impédance intempestive. En comparant la valeur de la deuxième mesure avec un seuil, ou en comparant la valeur absolue de la différence entre la première mesure et la deuxième mesure avec un seuil, on peut détecter une valeur de courant de mode commun trop importante sur la partie de la ligne électrique non compensée, signifiant alors qu'un courant circule dans une impédance intempestive, telle qu'une personne.

Selon un mode de réalisation, le procédé comporte la détection de défaillance lorsque la valeur absolue de la différence entre la première mesure et la deuxième mesure est supérieure à un seuil, notamment 3,5 mA, voire 0,5 mA. Cette différence entre la première mesure et la seconde mesure est par exemple obtenue avec un circuit soustracteur. Effectuer la détection de défaillance à partir de la différence entre la première et la seconde mesures permet d'obtenir un seuil de détection plus faible. Ainsi, la sécurité est améliorée.

Selon un mode de réalisation, la première mesure comprend la mesure du courant résiduel circulant dans la ligne d'échange électrique, et la deuxième mesure comprend la mesure du courant résiduel dans au moins la ligne de terre. Ainsi, la compensation du courant de mode commun est réalisée à partir de la ligne d'échange électrique.

Selon un mode de réalisation, la première mesure comprend la mesure du courant résiduel circulant dans la ligne de terre, et la deuxième mesure comprend la mesure du courant résiduel dans au moins la ligne d'échange électrique. Ainsi, la compensation du courant de mode commun est réalisée à partir du courant mesuré sur la ligne de terre.

Selon un mode de réalisation, la deuxième mesure comprend la mesure du courant résiduel circulant uniquement dans la partie de la ligne électrique qui ne subit pas la première mesure. Ainsi, si la ligne d'échange électrique est celle dont le courant est mesuré par le premier système de mesure, la deuxième mesure d'un courant résiduel est réalisée uniquement dans la ligne de terre ; ou si la ligne de terre est celle dont le courant est mesuré par le premier système de mesure, la deuxième mesure d'un courant résiduel est réalisée uniquement dans la ligne d'échange électrique.

Selon un mode de réalisation, la deuxième mesure comprend la mesure du courant résiduel circulant dans la partie du fil qui subit la première mesure et dans la partie de la ligne électrique qui ne subit pas la première mesure. La deuxième mesure comprend la mesure du courant résiduel circulant dans la ligne électrique, c'est-à-dire dans la ligne d'échange électrique et dans la ligne de terre. Cette mesure est par exemple obtenue à l'aide d'un tore entourant tous les conducteurs de la ligne électrique.

Selon un mode de réalisation, le procédé comprend une étape d'ouverture de un ou plusieurs interrupteurs pour interrompre l'échange d'énergie en cas de défaillance. Un exemple d'interrupteur est un relais électromécanique. Cependant tout type d'interrupteur adapté à des applications de puissance peut être envisagé.

Selon un mode de réalisation, le procédé comprend une étape d'arrêt de l'échange d'énergie lorsqu'une défaillance est détectée.

Les mesures de courant peuvent être réalisées entre autres par un tore, notamment un tore nanocristallin, ou par effet résistif, effet inductif ou par effet hall, ou par tous moyens adaptés permettant de mesurer un courant électrique.

La compensation du courant de mode commun est par exemple telle que décrite dans les demandes française FR20110058279 et/ou FR20130051201 déposées par la demanderesse.

Le procédé est en particulier mis en œuvre avec un dispositif selon l'invention décrit précédemment. Notamment, l'unité de commande du dispositif selon l'invention est configurée pour mettre en œuvre le procédé selon l'invention.

Le dispositif selon l'invention peut être embarqué dans un véhicule ou être disposé en dehors de ce dernier, étant par exemple intégré à une borne de recharge du réseau électrique à laquelle se branche un connecteur du circuit électrique en vue d'un transfert d'énergie électrique entre la source d'énergie électrique, via la borne, et le circuit électrique. Le dispositif électrique peut être aussi intégré à un câble de recharge d'une unité de stockage d'un véhicule.

Les valeur seuils du dispositif et du procédé selon l'invention sont par exemple ceux définis par la Commission Electrotechnique Internationale dans sa norme IEC61851 dans les applications de charge pour un véhicule électrique.

L'invention sera mieux comprise en faisant référence aux dessins, dans lesquels :
- les figures 1 et 2, déjà commentées, illustrent de façon schématique les risques liés à la recharge des batteries d'un véhicule électrique de l'état de l'art ;
- les figures 3 à 6 illustrent des applications comprenant un dispositif selon un mode de réalisation ;
- les figures 7 à 10 illustrent des applications comprenant un dispositif selon un autre mode de réalisation.

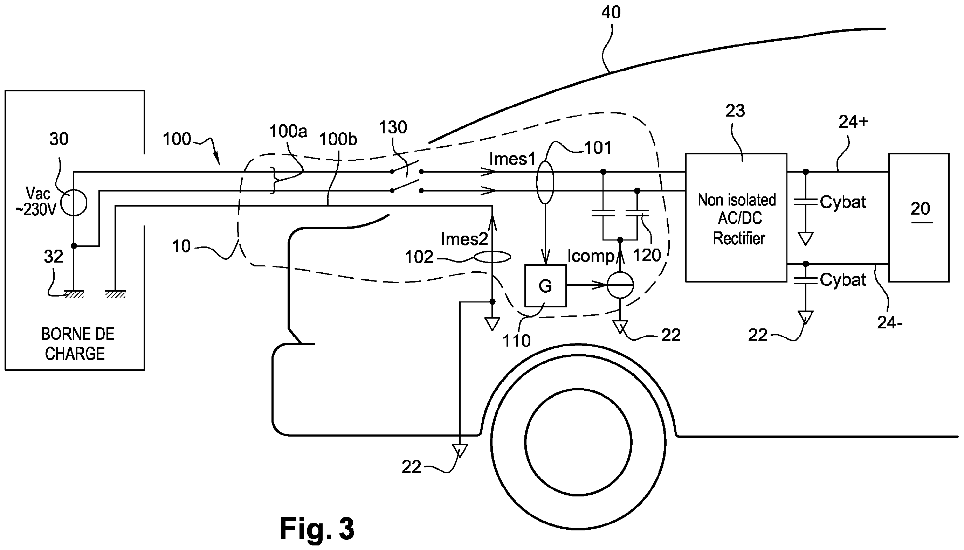

On a représenté à la figure 3 un ensemble 40 pour lequel un exemple de dispositif 10 selon l'invention peut être mis en œuvre. L'ensemble est un véhicule 40 à propulsion hybride ou électrique dans lequel le dispositif 10 est embarqué.

Une source d'énergie électrique 30 d'un réseau électrique extérieur au véhicule est apte à être branchée via un connecteur à un circuit électrique 23. Le circuit électrique 23 est dans l'exemple considéré embarqué dans le véhicule 40, faisant alors partie du circuit électrique de propulsion de ce véhicule.

Lorsque l'on souhaite charger une unité de stockage 20 d'énergie électrique du circuit électrique 23, la source d'énergie électrique 30 fournit par exemple une tension alternative au circuit électrique 23. Dans l'exemple considéré, le réseau est monophasé et la tension aux bornes de la source d'énergie électrique 30 a une valeur efficace égale à 230 V. La fréquence de la tension est de 50 Hz dans l'exemple considéré.

Le circuit électrique 23 est par exemple un convertisseur de tension configuré pour charger l'unité de stockage 20 à partir de la source électrique 30 par l'intermédiaire d'une ligne électrique 100. En particulier, le circuit électrique 23 fournit une tension continue à l'unité de stockage 20 à partir d'une tension alternative fournie par la source électrique 30. Le circuit électrique 23 peut comprendre des inductances et un étage de redressement de la tension alternative fournie par la source d'énergie électrique 30. Les bornes de sortie 24+ et 24- du circuit 23 délivrent alors une tension continue à l'unité de stockage 20. Le circuit électrique 23 est encore appelé circuit de charge dans ce qui suit.

Dans l'application où le circuit 23 est embarqué dans le véhicule 40, les inductances correspondent par exemple alors aux enroulements des phases du stator d'un moteur électrique pour la propulsion du moteur électrique. Les enroulements peuvent alors être reliés au réseau électrique selon l'enseignement de la demande WO 2010/057892.

L'étage de redressement peut comprendre des interrupteurs commandables tels que des transistors. L'étage est par exemple un composant PFC, connu de l'homme du métier pour redresser une tension alternative, adapter la valeur de la tension redressée à l'unité de stockage 20, et respecter les normes en vigueur quant à la valeur du facteur de puissance et à l'émission de courants harmoniques.

Le véhicule 40 comprend encore un châssis métallique 22 qui réalise une masse électrique du véhicule 40.

Le dispositif 10 comprend une ligne électrique 100 qui relie le réseau électrique au véhicule 40 de façon à permettre la charge de l'unité de stockage 20. A cet effet, la ligne électrique 100 comprend des conducteurs électriques, parmi lesquels une partie, dite ligne d'échange électrique 100a, réalise l'échange électrique entre la source électrique 30 et l'unité de stockage 20. Une autre partie des conducteurs électriques, dite ligne de terre 100b, réalise une liaison équipotentielle entre la terre 32 du réseau électrique et la masse électrique 22 du véhicule 40.

Dans le cas où la source d'énergie électrique 30 du réseau électrique fournit une tension alternative polyphasée, et lors d'une séquence de fonctionnement des interrupteurs de l'étage redresseur, un courant circule de la source électrique 30 vers l'unité de stockage 20 et vice versa, par l'intermédiaire de la ligne d'échange électrique 100a, de façon à obtenir une charge de l'unité de stockage 20. Cependant, des impédances parasites, dites encore impédances de mode commun, peuvent exister entre le circuit de charge 23 et la masse électrique 22 du véhicule 40. En figure 3, ces impédances sont modélisées par des capacités Cybat connectées d'une part aux bornes de sortie 24+, 24- du circuit de charge 23 et d'autre part à la masse électrique 22 du véhicule 40. Il est à noter que ces impédances peuvent aussi être de type inductif ou résistif. Du fait de l'existence de ces impédances parasites, un courant de mode commun i peut circuler du circuit 23 vers le châssis 22 et, en circulant dans la ligne de terre 100b, se reboucler dans le réseau électrique, pour passer dans la ligne d'échange électrique 100a jusqu'au circuit 23.

Pour réduire le courant de mode commun, le dispositif 10 comprend un premier système de mesure 101, un composant électronique 110 et au moins une impédance 120. Le premier système de mesure 101 mesure un courant de mode commun circulant dans la ligne d'échange électrique 100a. Cette mesure est transmise au composant électronique 110. Celui-ci génère une grandeur électrique, telle qu'une tension ou un courant, entre la masse 22 du véhicule 40 et une borne de l'impédance 120. Cette grandeur électrique est déterminée à partir du courant de mode commun mesuré par le premier système de mesure 101. Le composant électronique 110 applique un gain G qui est fonction de l'écart entre la valeur mesurée par le premier système de mesure 101 et une valeur consigne pour le courant de mode commun, par exemple zéro. L'impédance 120 est relié par une autre de ses bornes aux conducteurs de la ligne d'échange électrique 100a de façon à injecter un courant de compensation du courant de mode commun dans la ligne d'échange électrique 100a. Ainsi, le courant de mode commun circulant lors de l'échange d'énergie entre la source électrique 30 et l'unité de stockage électrique 20 est compensé. De préférence, pour chaque conducteur de la ligne électrique 100a, une impédance 120 a une de ses bornes connectée au composant électronique 110 de compensation et l'autre de ses bornes connectée au conducteur respectif de la ligne d'échange électrique 100a.

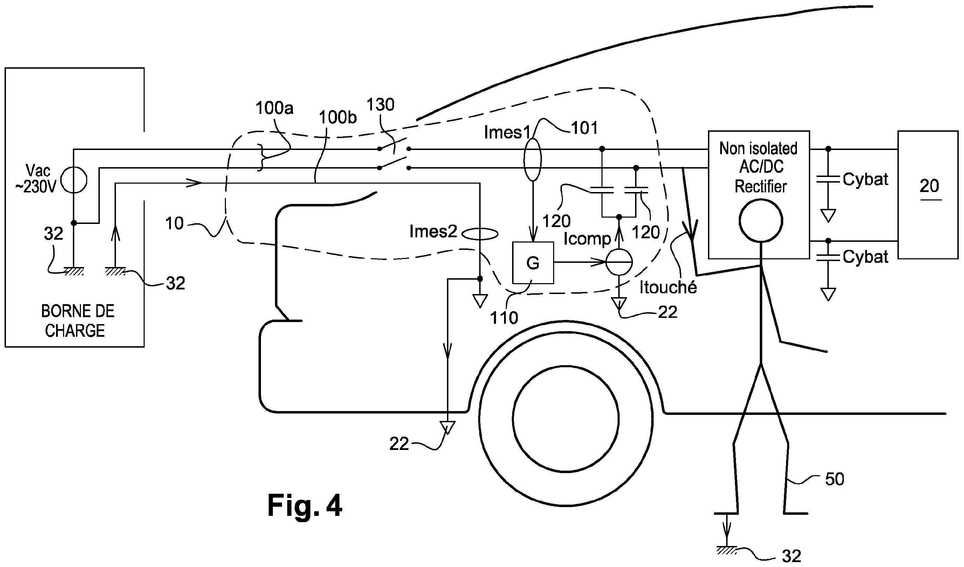

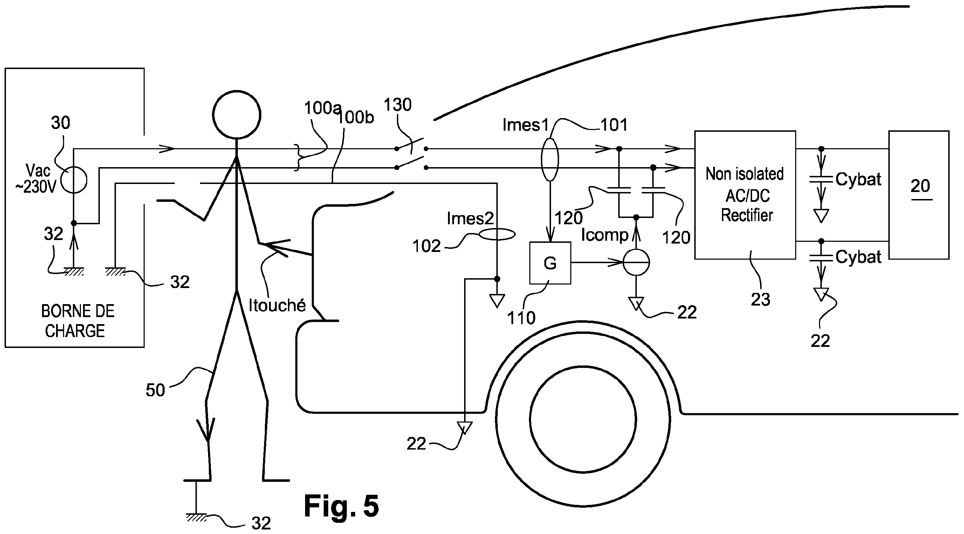

En outre, le dispositif 10 comprend un second système de mesure de courant 102 qui lui permet de détecter des cas de défaillance lors de l'échange d'énergie. Le second système de mesure de courant 102 mesure un courant résiduel circulant dans au moins une partie des conducteurs de la ligne électrique 100, cette partie comprenant la ligne de terre 100b. Ceci sera mieux compris en faisant référence aux figures 4 et 5.

Une situation de défaillance peut apparaitre lorsqu'une personne touche un conducteur de la ligne d'échange électrique 100a comme illustré à la figure 4. Un courant de mode commun Itouché circule alors entre le conducteur et la terre 32 par l'intermédiaire de la personne 50. Ce courant correspond au courant de compensation Icomp généré par la grandeur électrique appliquée par le compensant électronique 110 de compensation. Ce courant Icomp circule dans la terre 32 pour reboucler par la ligne de terre 100b jusqu'à la masse électrique 22 du véhicule 40, pour passer ensuite par l'impédance 120 de compensation. Le courant de compensation Icomp compense un courant de mode commun Imesl mesuré par le premier système de mesure 101 sur la ligne d'échange électrique 100a. Suite à la compensation, le courant de mode commun Imesl mesuré par le premier système de compensation est alors inférieur ou égal à 0,5 mA, voire même inférieur ou égal à 0,2 mA, voire sensiblement égal à zéro. Cependant, le courant de mode commun circulant sur la ligne de terre 100b correspond au courant de compensation Icomp et n'est donc pas nul.

Ainsi, en comparant la valeur du courant de mode commun Icomp circulant sur la ligne de terre 100b avec une valeur seuil, on peut détecter une situation de défaillance de la charge de l'unité de stockage 20, en particulier une situation dans laquelle une personne touche un conducteur de la ligne d'échange électrique 100a. Le courant de compensation Icomp est mesuré sur la ligne de terre 100b par le deuxième système de mesure 102. Par exemple, si la valeur du courant de mode commun mesuré sur la ligne de terre 100b est supérieure à 3,5 mA, voire à 5 mA, une situation de défaillance dangereuse pour une personne 50 est détectée.

Alternativement, la valeur absolue de la différence entre le courant de mode commun Icomp circulant sur la ligne de terre 100b et le courant de mode commun mesuré par le premier système de mesure 101 peut être comparé avec une valeur seuil. Utiliser cette différence permet de prendre en compte des seuils moins élevés, ce qui améliore la sécurité de la personne 50. Par exemple, si la valeur absolue de la différence entre le courant de mode commun Icomp mesuré sur la ligne de terre 100b et le courant de mode commun Imesl mesuré sur la ligne d'échange électrique 100a est supérieure à 0,5 mA, voire à 3,5 mA, une situation de défaillance dangereuse pour une personne 50 est détectée.

Une autre situation de défaillance peut apparaitre lorsque la ligne de terre 100b est coupée comme illustré à la figure 5. Tant qu'une personne 50 ne touche pas le châssis 22, la ligne de terre 100b étant coupée, aucun courant de mode commun ne circule. Lorsqu'une personne 50 touche le châssis 22, un courant de mode commun circule du châssis 22 vers la terre 32 par l'intermédiaire de la personne 50. Le courant de mode commun reboucle par la terre 32 et la ligne d'échange électrique 100a. Ce courant de mode commun correspond au courant Imesl mesuré sur la ligne d'échange électrique 100a par le premier système de mesure 101. Le courant de mode commun Imesl est compensé par le composant électronique 110 qui délivre une grandeur électrique générant un courant de compensation Icomp. Ce courant de compensation est injecté dans la ligne d'échange électrique 100a par l'intermédiaire de l'impédance 120 pour compenser le courant de mode commun Imesl circulant en amont du point d'injection du courant de compensation Icomp. La somme du courant de compensation Icomp et du courant de mode commun Imesl circule dans le circuit 23. Le courant de compensation Icomp reboucle ensuite vers l'impédance 120 par la masse électrique 22 du véhicule 40, et le courant de mode commun Imesl reboucle vers la personne 50 par l'intermédiaire de la masse électrique 22 du véhicule 40.

La personne 50 ne voit que le courant de mode commun Imesl qui va être compensé par le courant de compensation Icomp jusqu'à être inférieur ou égal à 0,5 mA ou inférieur ou égal à 0,2 mA, voire sensiblement égal à zéro. Ainsi, la situation de danger pour la personne 50 est diminuée.

En outre, on peut prévoir une détection de défaillance dès l'installation du courant de mode commun Imes 1. En effet, le courant de mode commun s'installe sur la ligne d'échange électrique 100a alors qu'il reste nul sur la ligne de terre 100b. Le deuxième système de mesure 102 mesure le courant circulant dans la ligne de terre 100b.

Ainsi, grâce à la mesure du courant circulant dans la ligne de terre 100b, on peut détecter que le courant de mode commun circulant dans la ligne de terre 100b reste nul alors que le courant de mode commun Imes 1 mesuré sur la ligne d'échange électrique 100a varie.

On peut aussi utiliser la valeur absolue de la différence entre le courant de mode commun Imesl circulant sur la ligne d'échange électrique 100a et le courant mesuré sur la ligne de terre 100b, pour la comparer avec une valeur seuil. Par exemple, si la valeur absolue de la différence entre le courant de mode commun mesuré sur la ligne de terre 100b et le courant de mode commun Imesl mesuré sur la ligne d'échange électrique 100a est supérieure à 0,5 mA, voire à 3,5 mA, une situation de défaillance dangereuse pour une personne 50 est détectée.

Par ailleurs, la coupure de la ligne de terre 100b peut être détectée dès son occurrence ou à l'initiation de l'échange d'énergie entre la source électrique 30 et l'unité de stockage d'énergie 20, grâce au deuxième système de mesure 102. Le courant de mode commun circulant à l'initiation de l'échange d'énergie peut être à partir des paramètres du véhicule 40 et du circuit 23 qui déterminent les impédances parasites Cybat. Lorsque le courant circulant dans la ligne de terre 100b reste nul, on détecte une anomalie significative d'une situation de défaillance. On peut aussi prévoir que le courant de mode commun compensé reste égal à une valeur de consigne non nulle, ainsi, une valeur nulle du courant de mode commun mesuré sur la ligne de terre 100b par le deuxième système de mesure 102 indique une coupure de la ligne de terre 100b.

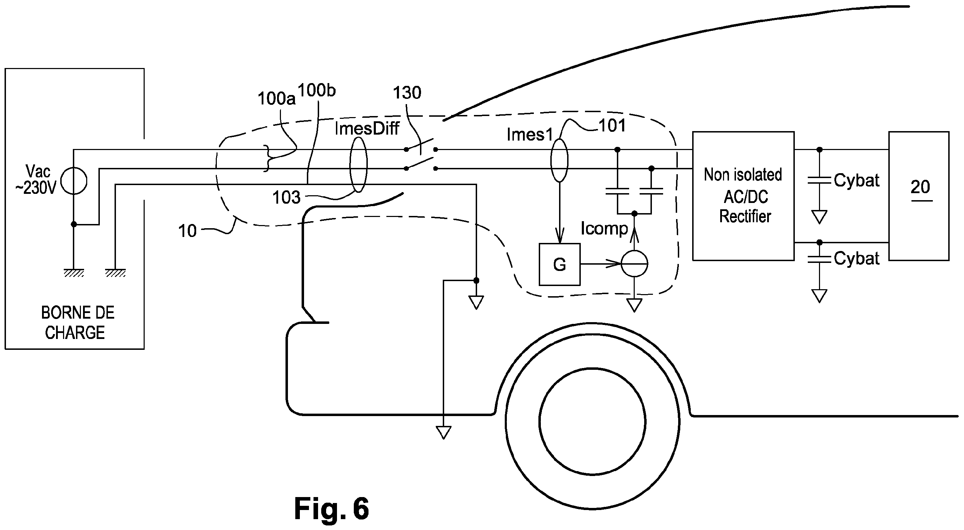

La figure 6 illustre une application comprenant une variante du dispositif 10 illustré en figures 3 à 5. Dans cette variante, le deuxième système de mesure 103 mesure directement la différence entre le courant de mode commun circulant dans la ligne d'échange électrique 100a et le courant de mode commun circulant dans la ligne de terre 100b. Le deuxième système de mesure 103 mesure donc le courant résiduel circulant dans la ligne électrique, c'est-à-dire dans la ligne d'échange électrique et dans la ligne de terre. Le système de mesure 103 peut comprendre un tore traversé par la ligne d'échange électrique 100a et la ligne de terre 100b de façon à réaliser une détection magnétique du courant résultant. En fonctionnement normal, le deuxième système 102 mesure un courant quasi nul, par exemple inférieur à 100 µA. Il donne une mesure plus précise et moins bruité que le résultat d'une différence entre deux mesures obtenues par deux systèmes de mesure différents. On peut donc utiliser un seuil de détection inférieur ou égal à 0, 2 mA, voire 0,1mA. On peut également avoir une bande passante de détection de défaut élevée, 20kHz par exemple. En effet, le bruit circulant dans les conducteurs de la ligne électrique 100 vont s'annuler entre eux.

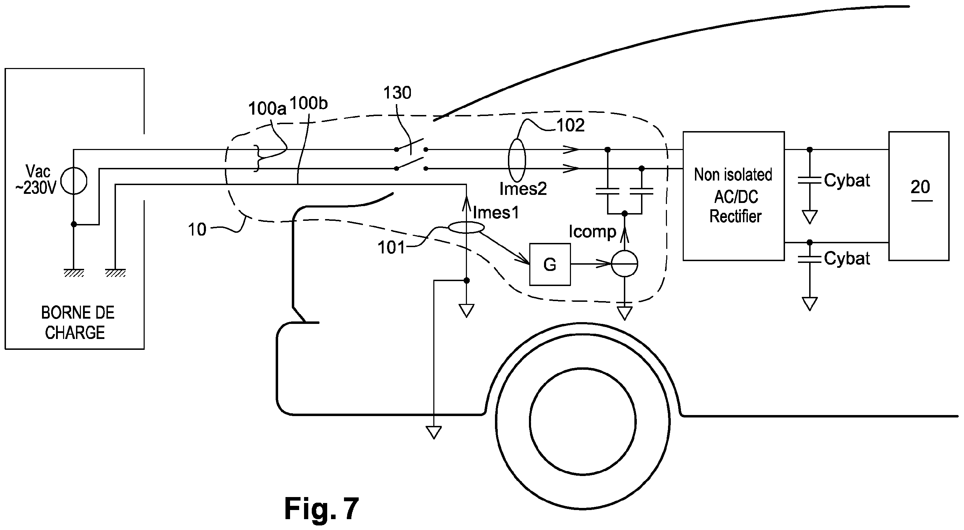

La figure 7 illustre un autre exemple de dispositif 10 selon l'invention dans une application similaire à celle illustrée en figure 3. Le dispositif 10 en figure 7 diffère de celui illustré en figure 3 en ce que le premier système de mesure 101 mesure un courant de mode commun circulant dans la ligne de terre 100b ; et en ce que le second système de mesure de courant 102 mesure un courant résiduel circulant dans au moins une partie des conducteurs de la ligne électrique 100, cette partie comprenant la ligne d'échange électrique 100a. En particulier, dans le dispositif illustré en figure 7, la compensation du courant de mode commun est réalisée à partir du courant mesuré sur la ligne de terre 100b ; alors que dans l'exemple illustré en figure 3, la compensation du courant de mode commun est réalisé à partir du courant mesuré sur la ligne d'échange électrique 100a.

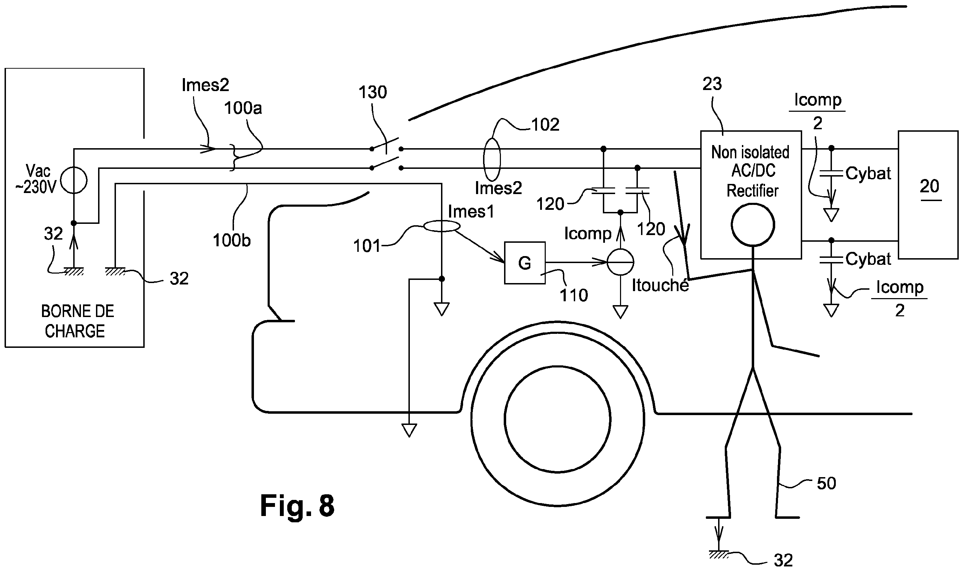

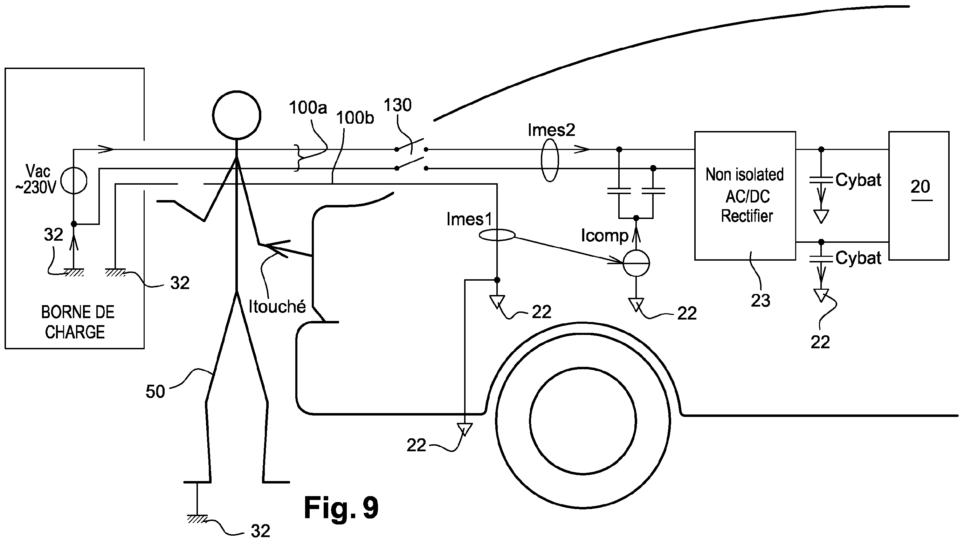

La détection de défaillance avec cet exemple de dispositif 10 va être décrite en faisant référence aux figures 8 et 9.

Lorsqu'une personne 50 touche un conducteur de la ligne d'échange électrique 100a comme illustré à la figure 8, un courant de mode commun Itouché circule alors entre le conducteur et la terre 32 par l'intermédiaire de la personne 50. Ce courant correspond au courant de mode commun Imes2 non compensé circulant sur la ligne d'échange électrique 100a. Ce courant Itouché circule dans la terre 32 pour reboucler par la ligne d'échange électrique 100a jusqu'à la personne 50.

Le premier système de mesure 101 mesure un courant de mode commun Imesl circulant dans la ligne de terre 100b. Un courant de compensation Icomp est généré par le composant électronique 110 pour réduire le courant de mode commun Imesl circulant dans la ligne de terre 100b. Ce courant de compensation Icomp circule dans l'impédance 120, dans le circuit 23, puis reboucle par la masse électrique 22 vers la borne de l'impédance 120connectée au composant électronique 110.

Suite à la compensation, le courant de mode commun Imesl circulant dans la ligne de terre 100b est alors inférieur ou égal à 0,5 mA, voire même inférieur ou égal à 0,2 mA, voire sensiblement égal à zéro. Cependant, le courant de mode commun Imes2 circulant sur la ligne d'échange électrique 100a n'est pas compensé car il y a une impédance intempestive correspondant à la personne 50.

Ainsi, en comparant la valeur du courant de mode commun Imes2 circulant sur la ligne d'échange électrique 100a avec une valeur seuil, on peut détecter une situation de défaillance de la charge de l'unité de stockage 20, en particulier une situation dans laquelle une personne 50 touche un conducteur de la ligne d'échange électrique 100a. Le courant de mode commun Imes2 circulant dans la ligne d'échange électrique 100a est mesuré par le deuxième système de mesure 102. Par exemple, si la valeur du courant de mode commun Imes2 mesuré sur la ligne d'échange électrique 100a est supérieure à 3,5 mA, voire à 5 mA, une situation de défaillance dangereuse pour une personne 50 est détectée.

Alternativement, la valeur absolue de la différence entre le courant de mode commun Imes2 circulant sur la ligne d'échange électrique 100a et le courant de mode commun Imesl circulant sur la ligne de terre 100a et mesuré par le premier système de mesure 101 peut être comparé avec une valeur seuil. Utiliser cette différence permet de prendre en compte des seuils moins élevés, ce qui améliore la sécurité de la personne 50. Par exemple, si la valeur absolue de la différence entre le courant de mode commun Imes2 mesuré sur la ligne d'échange électrique 100a et le courant de mode commun Imesl mesuré sur la ligne de terre 100b est supérieure à 0,5 mA, voire à 3,5 mA, une situation de défaillance dangereuse pour une personne 50 est détectée.

Une autre situation de défaillance peut apparaitre lorsque la ligne de terre 100b est coupée comme illustré à la figure 9. Tant qu'une personne 50 ne touche pas le châssis 22, la ligne de terre 100b étant coupée, aucun courant de mode commun ne circule. Lorsqu'une personne 50 touche le châssis 22, un courant de mode commun Itouché circule du châssis 22 vers la terre 32 par l'intermédiaire de la personne 50. Le courant de mode commun Itouché reboucle par la terre 32 et la ligne d'échange électrique 100a, atteint le circuit électrique 23 puis les impédances parasites Cybat et le châssis 22 jusqu'à la personne 50. Ce courant de mode commun Itouché correspond au courant Imes2 mesuré sur la ligne d'échange électrique 100a par le deuxième système de mesure 102.

Ainsi, en comparant la valeur du courant de mode commun Imes2 circulant sur la ligne d'échange électrique 100a avec une valeur seuil, on peut détecter une situation de défaillance de la charge de l'unité de stockage 20, en particulier lorsqu'une personne touche le châssis 22 alors que la ligne de terre 100a est coupée. Par exemple, si la valeur du courant de mode commun mesuré sur la ligne d'échange électrique 100a est supérieure à 3,5 mA, voire à 5 mA, une situation de défaillance dangereuse pour une personne 50 est détectée.

On peut aussi utiliser la valeur absolue de la différence entre le courant Imesl mesuré sur la ligne de terre 100b par le premier système de mesure 101 et le courant de mode commun Imes2 circulant sur la ligne d'échange électrique 100a, pour la comparer avec une valeur seuil. Par exemple, si la valeur absolue de la différence entre le courant de mode commun Imesl mesuré sur la ligne de terre 100b et le courant de mode commun Imes2 mesuré sur la ligne d'échange électrique 100a est supérieure à 0,5 mA, voire à 3,5 mA, une situation de défaillance dangereuse pour une personne 50 est détectée.

Par ailleurs, la coupure de la ligne de terre 100b peut être détectée dès son occurrence ou à l'initiation de l'échange d'énergie entre la source électrique 30 et l'unité de stockage d'énergie 20, grâce au premier système de mesure 101. Le courant de mode commun circulant à l'initiation de l'échange d'énergie peut être prévu à partir des paramètres du véhicule 40 et du circuit 23 qui déterminent les impédances parasites Cybat. Lorsque le courant circulant dans la ligne de terre 100b reste nul, on détecte une anomalie significative d'une situation de défaillance. On peut aussi prévoir que le courant de mode commun compensé reste égal à une valeur de consigne non nulle, ainsi, une valeur nulle du courant de mode commun mesuré sur la ligne de terre 100b par le premier système de mesure 101 indique une coupure de la ligne de terre 100b.

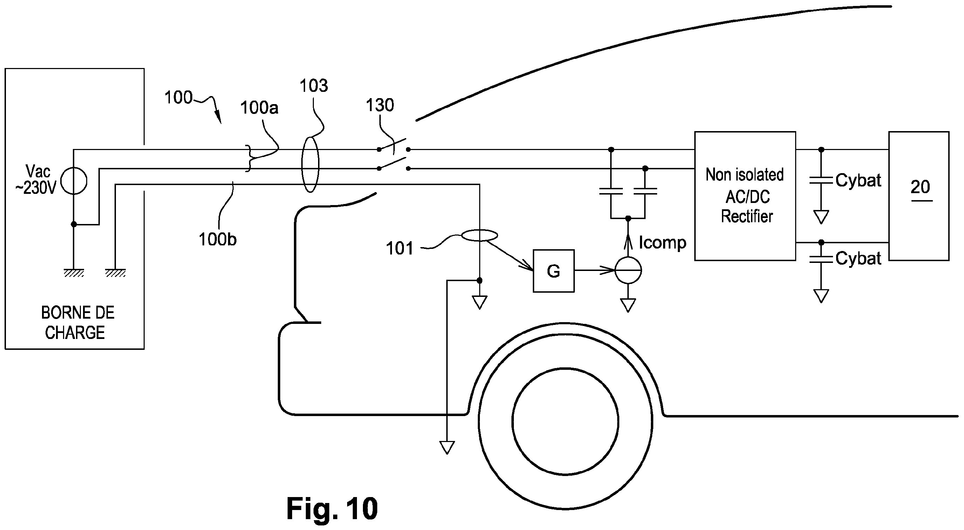

La figure 10 illustre une application comprenant une variante du dispositif 10 illustré en figures 7 à 9. Dans cette variante, le deuxième système de mesure 103 mesure directement la différence entre le courant de mode commun circulant dans la ligne d'échange électrique 100a et le courant de mode commun circulant dans la ligne de terre 100b. Le deuxième système de mesure 103 mesure donc le courant résiduel circulant dans la ligne électrique 100, c'est-à-dire dans la ligne d'échange électrique 100a et dans la ligne de terre 100b. Le deuxième système de mesure 103 peut comprendre un tore traversé par la ligne d'échange électrique 100a et la ligne de terre 100b de façon à réaliser une détection magnétique du courant résultant. En fonctionnement normal, le deuxième système 102 mesure un courant quasi nul, par exemple inférieur à 100 µA. Il donne une mesure plus précise et moins bruité que le résultat d'une différence entre deux mesures obtenues par deux systèmes de mesure différents. On peut donc utiliser un seuil de détection inférieur ou égal à 0, 2 mA, voire 0,1mA. On peut également avoir une bande passante de détection de défaut élevée, 20kHz par exemple. En effet, le bruit circulant dans les conducteurs de la ligne électrique 100 vont s'annuler entre eux.

Dans toutes les applications décrites précédemment, lorsqu'une défaillance est détectée, cela peut entraîner une ouverture d'interrupteurs afin d'interrompre l'échange d'énergie. Ces interrupteurs sont par exemple des relais 130 situés sur la ligne électrique 100, en particulier entre la source électrique 30 et le circuit électrique 23. L'interruption de l'échange d'énergie peut en outre être obtenue par l'arrêt de la conversion d'énergie réalisée par le circuit électrique 23.

L'invention n'est pas limitée aux exemples décrits. En particulier, le courant de compensation peut être injecté ailleurs dans le circuit 23, notamment à un potentiel interne du circuit 23, tel qu'une borne de sortie positive 24+ ou négative 24- du circuit 23. Ceci est par exemple décrit dans la demande française FR20110058279 au nom de la demanderesse.

## Revendications

1. Dispositif électrique (10) pour un échange sécuritaire d'énergie électrique entre un consommateur d'énergie électrique (20) d'un circuit électrique d'un ensemble, notamment d'un véhicule, et une source électrique (30) d'un réseau électrique extérieur audit ensemble, comportant :
- une ligne électrique (100) reliant le réseau électrique audit ensemble, ladite ligne (100) comprenant des conducteurs électriques dans lesquels une première partie (100a), dite ligne d'échange d'énergie, est apte à être connectée audit réseau électrique de manière à permettre un échange d'énergie électrique entre la source d'énergie électrique (30) dudit réseau et ledit consommateur d'énergie (20) ; et une deuxième partie (100b), dite ligne de terre, est apte à réaliser une liaison équipotentielle entre la masse électrique (22) de l'ensemble et la terre (32) du réseau électrique ;
- un premier système de mesure (101) apte à mesurer un courant de mode commun (i) circulant dans l'une des deux parties (100a, 100b) de la ligne électrique (100) lors d'un échange d'énergie entre la source électrique (30) et le consommateur (20) ledit dispositif électrique étant **caractérisé par** :
- au moins une impédance (120) reliée par une de ses bornes à la ligne d'échange électrique (100a) de la ligne électrique ou à un potentiel interne du circuit électrique,
- un composant électronique (110) relié d'une part audit premier système de mesure (101) du courant de mode commun, le composant (110) étant configuré pour appliquer, entre la ligne de terre (100b) et une autre borne de l'impédance (120), une grandeur électrique permettant, lorsque de l'énergie électrique est échangée entre le consommateur (20) et la source d'énergie électrique (30), de réduire le courant de mode commun circulant dans la partie de la ligne électrique (100) dont le courant est mesuré par le premier système de mesure (101),
- un deuxième système de mesure (102, 103) apte à mesurer un courant résiduel circulant dans au moins la partie de la ligne électrique (100) dont le courant n'est pas mesuré par le premier système de mesure (101), et
- une unité de commande configurée pour détecter une défaillance de l'échange d'énergie lorsqu'une valeur obtenue à partir du courant mesuré par le deuxième système de mesure (102, 103) est supérieure à une valeur seuil.

2. Dispositif selon la revendication 1, dans lequel la partie de la ligne électrique (100) dont le courant est mesuré par le premier système de mesure (101) est la ligne d'échange électrique (100a) de la ligne électrique (100) et le deuxième système de mesure (102, 103) est apte à mesurer un courant résiduel circulant dans au moins la ligne de terre (100b) de la ligne électrique (100).

3. Dispositif selon la revendication 1, dans lequel la partie de la ligne électrique dont le courant est mesuré par le premier système de mesure (101) est la ligne de terre (100b) de la ligne électrique (100) et le deuxième système de mesure (102, 103) est apte à mesurer un courant résiduel circulant dans au moins la ligne d'échange électrique (100a) de la ligne électrique (100).

4. Dispositif selon l'une des revendications 1 à 3, dans lequel le deuxième système de mesure (103) est apte à mesurer un courant résiduel circulant dans la partie dont le courant est mesuré par le premier système de mesure (101) et la partie dont le courant n'est pas mesuré par ledit premier système de mesure.

5. Dispositif selon l'une des revendications 1 à 3, dans lequel le deuxième système de mesure (102) est apte à mesurer un courant résiduel circulant uniquement dans la partie dont le courant n'est pas mesuré par ledit premier système de mesure.

6. Procédé sécuritaire d'échange d'énergie entre un consommateur d'énergie électrique d'un circuit électrique d'un ensemble, notamment d'un véhicule, et une source électrique d'un réseau électrique extérieur audit ensemble, comportant un échange d'énergie par l'intermédiaire d'une ligne électrique (100) reliant le réseau électrique audit ensemble et comprenant des conducteurs électriques dans lesquels une première partie (100a), dite ligne d'échange électrique, est connectée audit réseau électrique de manière à permettre un échange d'énergie électrique entre la source d'énergie électrique dudit réseau et ledit consommateur ; et une deuxième partie (100b), dite ligne de terre, réalise une liaison équipotentielle entre la masse électrique de l'ensemble et la terre (32) du réseau électrique, au moins une impédance (120) étant reliée à la ligne d'échange électrique (100a) de la ligne électrique (100) par une se ses bornes ou à un fil relié à un potentiel interne du circuit électrique ;
le procédé, mis en œuvre par un dispositif (10) selon l'une des revendications précédentes, comprenant en outre :
- la réduction d'un courant de mode commun comportant :
- une première mesure d'un courant de mode commun circulant dans l'une desdites parties (100a, 100b) de la ligne électrique (100) ;
- l'application à l'aide d'un composant électronique recevant la première mesure, d'une grandeur électrique (Vs, Is) entre la ligne de terre (100b) et l'autre borne de l'impédance (120), ladite grandeur électrique (Vs, Is) permettant de réduire le courant de mode commun (i) circulant dans la partie de la ligne électrique dans laquelle la première mesure est réalisée,
- une deuxième mesure d'un courant résiduel circulant dans au moins la partie qui ne subit pas la première mesure, et
- la détection d'une défaillance de l'échange d'énergie lorsqu'une valeur obtenue à partir du courant issu de la deuxième mesure de courant est supérieure à une valeur seuil.

7. Procédé selon la revendication 6, comportant la détection de défaillance lorsque la valeur de la deuxième mesure est supérieure à un seuil, notamment 5 mA, voire 3,5 mA.

8. Procédé selon la revendication 6, comportant la détection de défaillance lorsque la valeur absolue de la différence entre la première mesure et la deuxième mesure est supérieure à un seuil, notamment 3,5 mA, voire 0,5 mA

9. Procédé selon l'une des revendications 6 à 8, dans lequel la première mesure comprend la mesure du courant résiduel circulant dans la ligne d'échange électrique (100a), et la deuxième mesure comprend la mesure du courant résiduel dans au moins la ligne de terre (100b).

10. Procédé selon l'une des revendications 6 à 8, dans lequel la première mesure comprend la mesure du courant résiduel circulant dans la ligne de terre (100b), et la deuxième mesure comprend la mesure du courant résiduel dans au moins la ligne d'échange électrique (100a).

11. Procédé selon l'une des revendications 6 à 10, dans lequel la deuxième mesure comprend la mesure du courant résiduel circulant uniquement dans la partie de la ligne électrique qui ne subit la première mesure.

12. Procédé selon l'une des revendications 6 à 10, dans lequel la deuxième mesure comprend la mesure du courant résiduel circulant dans la partie du fil qui subit la première mesure et dans la partie de la ligne électrique qui ne subit la première mesure.

13. Procédé selon la revendication 12, dans lequel la deuxième mesure comprend la mesure du courant résiduel circulant dans la ligne d'échange électrique (100a) et la ligne de terre (100b).

## Patentansprüche

1. Elektrische Vorrichtung (10) für einen sicheren Austausch elektrischer Energie zwischen einem Verbraucher elektrischer Energie (20) eines elektrischen Stromkreises einer Anordnung, insbesondere eines Fahrzeugs, und einer elektrischen Quelle (30) eines elektrischen Netzes, das sich außerhalb der Anordnung befindet, aufweisend:
- eine elektrische Leitung (100), die das elektrische Netz mit der Anordnung verbindet, wobei die Leitung (100) elektrische Leiter umfasst, in welchen ein erster Abschnitt (100a), die Energieaustauschleitung, geeignet ist, an das elektrische Netz angeschlossen zu sein, um einen Austausch elektrischer Energie zwischen der Quelle elektrischer Energie (30) des Netzes und dem Energieverbraucher (20) zu gestatten; und ein zweiter Abschnitt (100b), der Erdleiter, geeignet ist, eine Potentialausgleichsverbindung zwischen der elektrischen Masse (22) der Anordnung und der Erde (32) des elektrischen Netzes herzustellen;
- ein erstes Messsystem (101), das geeignet ist, einen Gleichtaktstrom (i) zu messen, der in einem der zwei Abschnitte (100a, 100b) der elektrischen Leitung (100) bei einem Energieaustausch zwischen der elektrischen Quelle (30) und dem Verbraucher (20) fließt, wobei die elektrische Vorrichtung durch Folgendes gekennzeichnet ist:
- mindestens eine Impedanz (120), die über einen ihrer Anschlüsse an die elektrische Austauschleitung (100a) der elektrischen Leitung oder an ein internes Potential des elektrischen Stromkreises angeschlossen ist,
- ein elektrisches Bauelement (110), das einerseits mit dem ersten System zur Messung (101) des Gleichtaktstroms verbunden ist, wobei das Bauelement (110) dazu ausgebildet ist, zwischen dem Erdleiter (100b) und einem anderen Anschluss der Impedanz (120) eine elektrische Größe anzulegen, die es gestattet, wenn die elektrische Energie zwischen dem Verbraucher (20) und der Quelle elektrischer Energie (30) ausgetauscht wird, den Gleichtaktstrom zu verringern, der in dem Abschnitt der elektrischen Leitung (100) fließt, dessen Strom vom ersten Messsystem (101) gemessen wird,
- ein zweites Messsystem (102, 103), das geeignet ist, einen Reststrom zu messen, der zumindest in dem Abschnitt der elektrischen Leitung (100) fließt, dessen Strom nicht vom ersten Messsystem (101) gemessen wird, und
- eine Steuereinheit, die dazu ausgebildet ist, einen Fehler des Energieaustauschs festzustellen, wenn ein Wert, der anhand des Stroms erhalten wird, der vom zweiten Messsystem (102, 103) gemessen wird, größer als ein Schwellenwert ist.

2. Vorrichtung nach Anspruch 1, wobei der Abschnitt der elektrischen Leitung (100), dessen Strom vom ersten Messsystem (101) gemessen wird, die elektrische Austauschleitung (100a) der elektrischen Leitung (100) ist und das zweite Messsystem (102, 103) geeignet ist, einen Reststrom zu messen, der zumindest im Erdleiter (100b) der elektrischen Leitung (100) fließt.

3. Vorrichtung nach Anspruch 1, wobei der Abschnitt der elektrischen Leitung, dessen Strom vom ersten Messsystem (101) gemessen wird, der Erdleiter (100b) der elektrischen Leitung (100) ist und das zweite Messsystem (102, 103) geeignet ist, einen Reststrom zu messen, der zumindest in der elektrischen Austauschleitung (100a) der elektrischen Leitung (100) fließt.

4. Vorrichtung nach einem der Ansprüche 1 bis 3, wobei das zweite Messsystem (103) geeignet ist, einen Reststrom zu messen, der in dem Abschnitt, dessen Strom vom ersten Messsystem (101) gemessen wird, und dem Abschnitt, dessen Strom nicht vom ersten Messsystem gemessen wird, fließt.

5. Vorrichtung nach einem der Ansprüche 1 bis 3, wobei das zweite Messsystem (102) geeignet ist, einen Reststrom zu messen, der nur in dem Abschnitt fließt, dessen Strom nicht vom ersten Messsystem gemessen wird.

6. Sicheres Verfahren zum Energieaustausch zwischen einem Verbraucher elektrischer Energie eines elektrischen Stromkreises einer Anordnung, insbesondere eines Fahrzeugs, und einer elektrischen Quelle eines elektrischen Netzes, das sich außerhalb der Anordnung befindet, aufweisend einen Energieaustausch mittels einer elektrischen Leitung (100), die das elektrische Netz mit der Anordnung verbindet und elektrische Leiter umfasst, in welchen ein erster Abschnitt (100a), die elektrische Austauschleitung, an das elektrische Netz angeschlossen ist, um einen Austausch elektrischer Energie zwischen der Quelle elektrischer Energie des Netzes und dem Verbraucher zu gestatten; und ein zweiter Abschnitt (100b), der Erdleiter, eine Potentialausgleichsverbindung zwischen der elektrischen Masse der Anordnung und der Erde (32) des elektrischen Netzes herstellt, wobei mindestens eine Impedanz (120) über einen ihrer Anschlüsse an die elektrische Austauschleitung (100a) der elektrischen Leitung (100) oder an einen Draht, der mit einem internen Potential des elektrischen Stromkreises verbunden ist, angeschlossen ist;
wobei das Verfahren, das von einer Vorrichtung (10) nach einem der vorhergehenden Ansprüche umgesetzt wird, ferner Folgendes umfasst:
- das Verringern eines Gleichtaktstroms, aufweisend:
- ein erstes Messen eines Gleichtaktstroms, der in einem der Abschnitte (100a, 100b) der elektrischen Leitung (100) fließt;
- das Anlegen, mithilfe eines elektronischen Bauelements, das die erste Messung empfängt, einer elektrischen Größe (Vs, Is) zwischen dem Erdleiter (100b) und dem anderen Anschluss der Impedanz (120), wobei es die elektrische Größe (Vs, Is) gestattet, den Gleichtaktstrom (i) zu verringern, der in dem Abschnitt der elektrischen Leitung fließt, in dem das erste Messen durchgeführt wird,
- ein zweites Messen eines Reststroms, der zumindest in dem Abschnitt fließt, der nicht dem ersten Messen unterzogen wird, und
- das Feststellen eines Fehlers des Energieaustauschs, wenn ein Wert, der anhand des Stroms erhalten wird, der aus der zweiten Strommessung hervorgeht, größer als ein Schwellenwert ist.

7. Verfahren nach Anspruch 6, aufweisend das Feststellen eines Fehlers, wenn der Wert der zweiten Messung größer als ein Schwellenwert, insbesondere 5 mA, ja sogar 3,5 mA ist.

8. Verfahren nach Anspruch 6, aufweisend das Feststellen eines Fehlers, wenn der Absolutwert der Differenz zwischen der ersten Messung und der zweiten Messung größer als ein Schwellenwert, insbesondere 3,5 mA, ja sogar 0,5 mA ist.

9. Verfahren nach einem der Ansprüche 6 bis 8, wobei das erste Messen das Messen des Reststroms umfasst, der in der elektrischen Austauschleitung (100a) fließt, und das zweite Messen das Messen des Reststroms zumindest im Erdleiter (100b) umfasst.

10. Verfahren nach einem der Ansprüche 6 bis 8, wobei das erste Messen das Messen des Reststroms umfasst, der im Erdleiter (100b) fließt, und das zweite Messen das Messen des Reststroms zumindest in der elektrischen Austauschleitung (100a) umfasst.

11. Verfahren nach einem der Ansprüche 6 bis 10, wobei das zweite Messen das Messen des Reststroms umfasst, der nur in dem Abschnitt der elektrischen Austauschleitung fließt, der nicht dem ersten Messen unterzogen wird.

12. Verfahren nach einem der Ansprüche 6 bis 10, wobei das zweite Messen das Messen des Reststroms umfasst, der in dem Abschnitt des Drahts, der dem ersten Messen unterzogen wird, und in dem Abschnitt der elektrischen Leitung, der nicht dem ersten Messen unterzogen wird, fließt.

13. Verfahren nach Anspruch 12, wobei das zweite Messen das Messen des Reststroms umfasst, der in der elektrischen Austauschleitung (100a) und dem Erdleiter (100b) fließt.

## Claims

1. Electrical device (10) for a secure exchange of electrical power between an electrical power consumer (20) of an electrical circuit of an assembly, in particular of a vehicle, and an electricity source (30) of an electrical network external to said assembly, comprising:
- an electrical line (100) connecting the electrical network to said assembly, said line (100) comprising electrical conductors in which a first portion (100a), called power exchange line, is able to be connected to said electrical network so as to allow an exchange of electrical power between the electrical power source (30) of said network and said power consumer (20) ; and a second portion (100b), called ground line, is able to make an equipotential connection between the electrical ground (22) of the assembly and the ground (32) of the electrical network;
- a first measurement system (101) able to measure a common mode current (i) flowing through one of the two portions (100a, 100b) of the electrical line (100) during an exchange of power between the electricity source (30) and the consumer (20), said electrical device being **characterized by**:
- at least one impedance (120) connected by one of its terminals to the electrical exchange line (100a) of the electrical line or to an internal potential of the electrical circuit,
- an electronic component (110) connected on the one hand to said first measurement system (101) for measuring the common mode current, the component (110) being configured to apply, between the ground line (100b) and another terminal of the impedance (120), an electrical quantity allowing, when electrical power is exchanged between the consumer (20) and the electrical power source (30), the common mode current flowing through the portion of the electrical line (100), the current of which is measured by the first measurement system (101), to be decreased,
- a second measurement system (102, 103) able to measure a residual current flowing through at least the portion of the electrical line (100), the current of which is not measured by the first measurement system (101), and
- a control unit configured to detect a fault in the exchange of power when a value obtained on the basis of the current measured by the second measurement system (102, 103) is higher than a threshold value.

2. Device according to Claim 1, wherein the portion of the electrical line (100), the current of which is measured by the first measurement system (101), is the electrical exchange line (100a) of the electrical line (100) and the second measurement system (102, 103) is able to measure a residual current flowing through at least the ground line (100b) of the electrical line (100) .

3. Device according to Claim 1, wherein the portion of the electrical line, the current of which is measured by the first measurement system (101), is the ground line (100b) of the electrical line (100) and the second measurement system (102, 103) is able to measure a residual current flowing through at least the electrical exchange line (100a) of the electrical line (100).

4. Device according to one of Claims 1 to 3, wherein the second measurement system (103) is able to measure a residual current flowing through the portion, the current of which is measured by the first measurement system (101), and the portion, the current of which is not measured by said first measurement system.

5. Device according to one of Claims 1 to 3, wherein the second measurement system (102) is able to measure a residual current flowing only through the portion, the current of which is not measured by said first measurement system.

6. Method for securely exchanging power between an electrical power consumer of an electrical circuit of an assembly, in particular of a vehicle, and an electricity source of an electrical network external to said assembly, comprising an exchange of power via an electrical line (100) connecting the electrical network to said assembly and comprising electrical conductors in which a first portion (100a), called power exchange line, is connected to said electrical network so as to allow an exchange of electrical power between the electrical power source of said network and said consumer; and a second portion (100b), called ground line, makes an equipotential connection between the electrical ground of the assembly and the ground (32) of the electrical network, at least one impedance (120) being connected to the electrical exchange line (100a) of the electrical line (100) by one of its terminals or to a wire connected to an internal potential of the electrical circuit;
the method, implemented by a device (10) according to one of the preceding claims, further comprising:
- the decreasing of a common mode current comprising:
- a first measurement of a common mode current flowing through one of said portions (100a, 100b) of the electrical line (100);
- the application, using an electronic component receiving the first measurement, of an electrical quantity (Vs, Is) between the ground line (100b) and the other terminal of the impedance (120), said electrical quantity (Vs, Is) allowing the common mode current (i) flowing through the portion of the electrical line in which the first measurement is taken to be decreased,
- a second measurement of a residual current flowing through at least the portion that is not subject to the first measurement, and
- the detection of a fault in the exchange of power when a value obtained on the basis of the current from the second current measurement is higher than a threshold value.

7. Method according to Claim 6, comprising the detection of a fault when the value of the second measurement is higher than a threshold, in particular 5 mA, or even 3.5 mA.

8. Method according to Claim 6, comprising the detection of a fault when the absolute value of the difference between the first measurement and the second measurement is higher than a threshold, in particular 3.5 mA, or even 0.5 mA.

9. Method according to one of Claims 6 to 8, wherein the first measurement comprises the measurement of the residual current flowing through the electrical exchange line (100a), and the second measurement comprises the measurement of the residual current in at least the ground line (100b).

10. Method according to one of Claims 6 to 8, wherein the first measurement comprises the measurement of the residual current flowing through the ground line (100b), and the second measurement comprises the measurement of the residual current in at least the electrical exchange line (100a).

11. Method according to one of Claims 6 to 10, wherein the second measurement comprises the measurement of the residual current flowing only through the portion of the electrical line that is not subject to the first measurement.

12. Method according to one of Claims 6 to 10, wherein the second measurement comprises the measurement of the residual current flowing through the portion of the wire that is subject to the first measurement and through the portion of the electrical conductor that is not subject to the first measurement.

13. Method according to Claim 12, wherein the second measurement comprises the measurement of the residual current flowing through the electrical exchange line (100a) and the ground line (100b).
